# EUROPEAN PATENT APPLICATION

(11) **EP 1 543 933 A2**
(43) Date of publication of application: **22.06.2005**
(21) Application number: 04009286.8
(22) Date of filing: 20.04.2004
(51) Int. Cl.: B29C 33/56, B29C 33/30, B29C 33/62

(54) **Moulds for the production of plastic abrasives and support thereof**

(30) Priority: 16.12.2003 IT MI20032468
(71) Applicant: Polyomnia S.r.l., 20145 Milan (IT)
(72) Inventor: Re, Giovanni, 20034 Giussano (MI) (IT)
(74) Representative: Parisi, Luigi

(57) **Abstract**

The invention relates to a mould (15) for the production of plastic abrasives, of the type used individually or in sets for baking mixtures consisting of thermosetting resins combined with abrasive powders in high-temperature ovens, wherein said mould is coated with metal-matrix materials in which at least one substance with non-stick properties is mixed in micronised form. The invention also includes transport units which are easily detached from the drive chains of moulds for the production of plastic abrasives, of the type used for baking mixtures consisting of thermosetting resins combined with abrasive powders in high-temperature ovens. The moulds positioned on the guides (13) of the transport units are attached individually and removably.

## Description

This invention relates to moulds for the production of plastic abrasives and their supports.

A mixture of thermosetting resins combined with abrasive powders, formed in suitable moulds by heat-curing in ovens, is used to make plastic abrasives.

In particular, the mixture of thermosetting resin and abrasive powder is poured into suitable moulds in the liquid state and subsequently conveyed to ovens for heat-curing of the resin, this process being required to obtain the end product.

Plastic abrasives are usually manufactured in a continuous cycle, using automatic machines and tunnel ovens.

The filling system will therefore be positioned at the entrance to the oven, while the system designed to eject the finished products from the moulds will be situated downstream of the heat-curing process, at the outlet of the oven.

Heat-curing is one of the most critical stages in the process, because the properties of the end product depend on the way in which it is performed.

The uniformity of the material produced, and its mechanical and physical characteristics, depend on the efficacy of the curing process.

To obtain high-quality abrasives, it is necessary to use catalyses which give a high curing yield, with no limitations on the maximum exothermic temperatures of the chemical reaction.

In this context, a known embodiment of moulds involves the use of thermoplastic materials such as polyethylene and polypropylene, or silicone rubber.

However, their use involves considerable drawbacks associated with the chemical and mechanical aggressiveness exercised by the mixture on the moulds.

This chemical aggression is mainly due to the presence of styrene, a monomer contained in the polyester resin, to the reaction by-products that form during the curing stage, and to the breakdown of the peroxide initiators.

The mechanical aggression is obviously due to the presence of abrasive fillers, mainly constituted by quartz powders, in the mixture.

Moreover, the moulds undergo cyclical thermal stresses of heating and cooling due to their heating in the oven, and above all to the violent exothermic curing reaction.

As a result of these continual chemical, mechanical and thermal stresses, the mould surface is subject to rapid deterioration with consequent pitting, to the point where it may be impossible to eject the finished products satisfactorily.

Moreover, if a production process with automatic machines working on a continuous cycle is used, inability to eject pieces due to mould deterioration problems will require all moulds to be replaced in advance.

This means that the moulds have to be replaced after a small number of manufacturing cycles, generating very large amounts of scrap. The average lifetime of the moulds used in applications according to the known art can be estimated at around 5 working days at 8 hours a day.

Further disadvantages associated with the use of materials according to the known art are that they present low heat conductivity and a low heat capacity. This leads to low thermal efficiency of the manufacturing cycle and uneven heating, and therefore curing, of the material contained in it. In view of their low heat capacity, the moulds arrive at the entrance to the tunnel oven at ambient temperature, thus further reducing the efficiency of the heat exchange.

A very important factor is the rather low maximum temperature to which conventional moulds can be subjected, ie. not more than about 90°C.

This factor drastically restricts the choice of solutions associated with the process chemistry and the reactivity of the raw materials.

Penalisation of the heat exchange to trigger the curing reaction in the mixture usually results in lower productivity.

A very large number of internal laboratory tests and in-process tests led us to consider the use of two types of coating for metal moulds: metal coatings such as chrome-plating, or fluorinated polymer coatings such as perfluoroalkoxy (PFA), fluorinated ethylene propylene (FEP) resins and polytetrafluoroethylene (PTFE).

The former guaranteed excellent mechanical and thermal resistance, but ejection of the finished products was difficult.

The latter had excellent non-stick properties which facilitated ejection, but their resistance to thermal and chemical/physical stresses was very limited.

The innovation involved combining the properties of the two best solutions we had selected and eliminating their drawbacks.

This invention offers a mould manufacturing process which, due to the chemical/physical characteristics of the material used to make the moulds, considerably increases mould life, improves the quality of the products made in them, and increases productivity.

The invention also includes a support for moulds designed to manufacture plastic abrasives.

The moulds containing the mixture, placed close to the entrance of the tunnel oven by the filling system, are conveyed automatically into said oven by means of a track belt on which the moulds are positioned.

In this context, a type of support used, for example, in the case of polypropylene moulds, is typically constituted by parallel aluminium guides running transversely to the direction of advance.

These aluminium guides are hooked directly to the wings of the chains that move the moulds during the manufacturing process. Bars holding 5 to 10 moulds integral with one another, depending on the size of the moulds, are inserted into said guides.

In the support system described above, the variable of primary importance in order to dimension the system correctly, is the chain pitch.

This value is used to establish the distance between one guide and the next, thus defining productivity on the basis of the geometrical optimisation of the arrangement of the moulds on the support.

A further factor which should be taken into due account in the manufacture of said supports is the need to have differentiated chain pitches, based on the size of the moulds to be fitted. Chains of different sizes, each involving the use of a suitable crown gear, must consequently be employed. If a long pitch is needed to make large pieces, small-link chains are normally used, so that the moulds can be fitted alternately on the guides.

The main drawback of said methods is that a single chain of standard dimensions suitable for all types of production cannot be used.

The purpose of this invention is to solve the above-mentioned problems by providing a more versatile support for moulds designed to make plastic abrasives.

A further purpose of the invention is to provide a support for moulds designed to make plastic abrasives which features simpler assembly and access to the moulds.

These purposes are achieved by the moulds for the production of plastic abrasives and their supports described in the annexed claims, to which the reader is referred for the sake of brevity.

The invention will now be described in detail, by way of example but not of limitation, with reference to the annexed drawings, wherein:

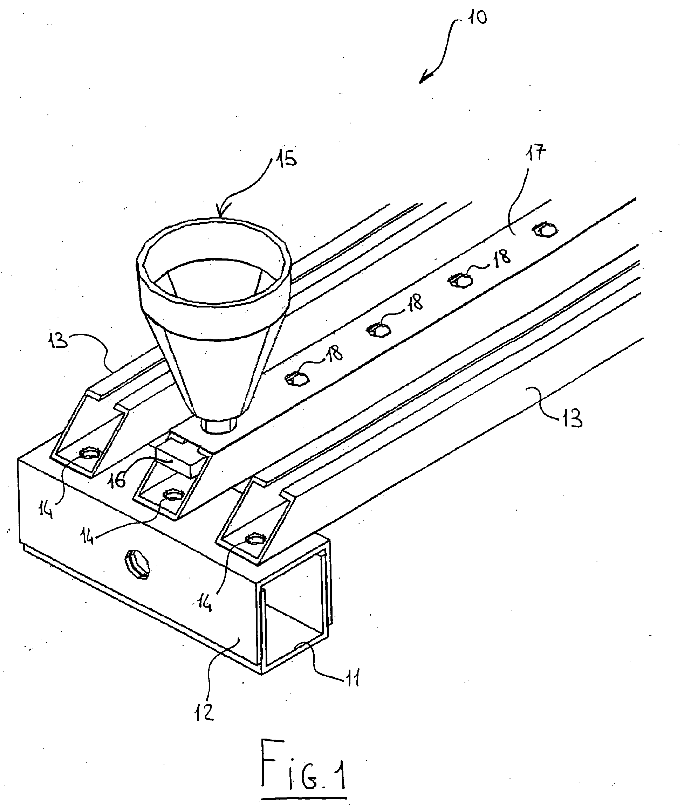

figure 1 shows a perspective view of a mould designed for the production of plastic abrasives, and the corresponding support, according to this invention.

The set of moulds for the production of plastic abrasives and their supports, according to this invention, is indicated globally in a sample embodiment by reference number 10.

Assembly 10 is designed for use with large-link drive chains, as illustrated in fig. 1. Plates 11 are attached to suitable anchorage wings. Counterplates 12 are anchored to said plates 11 with a steel pin and a cotter pin.

Mould support guides 13 are secured to counterplates 12. The pitch of guides 13 is formed by suitably drilling counterplates 12, which are easily removed. Holes 14 for this fixing are visible. Guides 13 are preferably dovetailed.

Moulds for plastic abrasives 15 according to this invention are secured to guides 13 individually, by means of a thread on the head which engages with a perforated, threaded bar 16, which said bar is inserted into the corresponding guide 13.

Guides 13 and bars 16 are preferably made of aluminium.

The fixing system described has the further advantage of making individual replacements for maintenance purposes more versatile (by contrast with the known art, which uses bars with rows of integral moulds).

A particular heat-resistant material, which does not dilate and is non-stick, was used to protect aluminium guides 13, namely teflon-impregnated fibreglass, which constitutes the protective tape.

Said tapes 17, containing holes 18 for moulds 15, are positioned between moulds 15, one of which is shown in fig. 1 by way of example, and guides 13.

It is very important to note that the invention involves the use of metal moulds 15, coated with metal-matrix materials into which micronised teflon is mixed.

Alternatively, other substances with similar non-stick properties could be used.

This coating is preferably applied by means of non-galvanic treatments (chemical deposition).

The minimum thickness of said coating is the thickness obtained by means of non-galvanic treatments or chemical depositions for coating surfaces in general, and may be as little as a few microns.

In particular, in a preferred embodiment of this invention, the minimum coating thickness with metal-matrix materials, with which at least one substance with non-stick properties is mixed in micronised form, is ≥ 10 microns.

Thus the advantages of both materials are exploited and their disadvantages cancelled out, giving rise to numerous major advantages compared with the prior art.

Firstly, the high thermal conductivity of the material from which the mould is made increases the productivity of the process and the quality of the end product, due to a better uniformity of heating.

Secondly, its excellent heat resistance, a value which influences the maximum operating temperature of the moulds (around 300°C), enables the oven temperature to be increased, which leads to increased productivity.

Moreover, catalyses with high exothermic peaks can be performed, allowing the manufacture of products with a higher curing rate, leading to better quality.

Another significant variable in the plastic abrasives production process is the mould temperature on entrance to the oven.

In processes performed by the prior art, the moulds reach the oven entrance at room temperature as they do not possess the thermal capacity needed to stored the heat accumulated during the time spent in the oven.

The high heat capacity of the material used for the process according to the invention allows mould temperatures of approx. 50-60°C, considerably increasing the productivity of the process.

Moreover, perfect coupling between the mixture and mould is achieved as a result of this property, because at the filling stage, the viscosity of the mixture immediately declines near the area in which it comes into contact with the mould walls.

Further advantages of the subject of this invention derive from the fact that the material used to make the moulds possesses greater chemical resistance than the materials conventionally used.

The result of this characteristic is a considerable increase in the time taken for the moulds to deteriorate, thus facilitating ejection of the pieces manufactured and increasing the productivity of the process.

Moreover, the non-stick properties of the material that forms the mould coating facilitate ejection of the finished products.

As these moulds are not liable to deteriorate, the presence of "spent" moulds, ie. rejects, is advantageously eliminated, thus eliminating the labour required to perform the lengthy operations of total prior replacement of the belts.

Finally, another significant advantage is that the process produces plastic abrasives with perfect geometry, which is not affected by gradual, serious mould deterioration.

In particular "Metal matrix", one of the basic materials used in the coating of the mould according to the invention, means one or more metals, or alloys thereof, selected from the group consisting of: nickel, copper, chromium, cobalt, manganese, titanium, iron, zinc, aluminium, rhodium, palladium, silver, platinum, gold, vanadium, tungsten, lead and tin.

In a particularly preferred embodiment, the metal matrix is nickel.

Substance with non-stick properties", the additional basic material used in the coating of the mould according to the invention, means, in particular, one or more fluoropolymers and, even more in particular, one or more fluoropolymers or mixtures thereof, selected from the group consisting of polytetrafluoroethylene (PTFE), fluorinated ethylenepropylene resins (FEP), perfluoroalkoxy (PFA), polyvinylidene fluoride (PVDF), ethylene tetrafluoroethylene (ETFE) and ethylene chlorotrifluoroethylene (ECTFE).

In a particularly preferred embodiment of this invention, the fluoropolymer is polytetrafluoroethylene (PTFE).

In a further preferred embodiment of this invention, the mould coating comprises a metal matrix in which at least one substance with non-stick properties, preferably fluoropolymer(s), is mixed in micronised form in the percentage of 5% to 60% by weight, preferably 25% to 30% by weight, of the total weight of the metal matrix and the substance with non-stick properties.

In a further even more preferred embodiment of this invention, the mould coating consists of metal matrix in which at least one substance with non-stick properties, preferably fluoropolymer(s), is mixed in micronised form in the percentage of 5% to 60% by weight, preferably 25% to 30% by weight, the weight percentage of the metal matrix being its complement to 100%.

"Mixing in micronised form" of the substance with non-stick properties, such as the fluoropolymers according to this invention in particular, means that said non-stick substance is mixed in the form of particles with an average size of 0.1 µm to 200 µm, in particular with a size of 0.5 µm to 100 µm, and more in particular in the form of particles with an average size of 1 µm. In an even more preferred embodiment, the mould according to the invention is coated with materials consisting of a nickel metal matrix wherein polytetrafluoroethylene (PTFE) is mixed in the percentage of 25% to 30% in weight, the percentage in weight of the metal matrix being its complement to 100%, and said PTFE in micronised form consisting of particles with an average size of 1 µm. "Plastic abrasives manufacturing processes by baking mixtures consisting of thermosetting resins combined with abrasive powders in ovens at high temperatures", conducted in coated moulds according to the present invention, means, in general, processes that involve baking in ovens of mixtures comprising thermosetting resins, such as urea-formaldehyde or polyester resins, in the presence of heat initiators or catalysts, such as peroxides or mineral acids, which said resins polymerise in the presence of abrasive powders or fillers such as quartz.

A further subject of this invention is therefore a process for manufacturing plastic abrasive by baking a mixture comprising at least a thermosetting resin combined with an heat initiators or catalyst and an abrasive powder or filler, wherein said mixture is contained in a mould coated with metal-matrix materials wherein at least one substance with non-stick properties is mixed in micronised form.

The mould support to which this invention relates presents the following advantages compared with existing supports.

Firstly, the guide pitch is independent of the chain pitch.

This means that the drive chains are universal, and need not be replaced according to the size of the mould fitted.

Secondly, the belt configuration is changed simply by adjusting the counterplates to which the guides are attached, whereas in the solutions used by the known art, each guide must be removed and replaced individually.

A further considerable advantage of the use of chains with large links is that they are more robust, thus considerably increasing the reliability of the entire system.

Finally, each mould is made so that it can be attached individually, for example by screwing, to the perforated, threaded bar, which will be inserted into the guide.

This procedure advantageously increases the versatility of mould maintenance, assembly and replacement operations.

The above description clearly demonstrates that the inventive concepts are not limited to the examples of application illustrated, but could also be advantageously adapted to other similar applications.

This invention is therefore liable to numerous modifications and variations, all of which fall within the scope of the inventive concept described in the annexed claims, while the technical details can vary as needed.

### LABORATORY AND MANUFACTURING TESTS

Conical moulds with a base of approx. 20 mm in diameter were made with different types of materials, as follows:
1) Polypropylene moulds: type (a).
2) Moulds made of metal such as steel or aluminium:
   type (b).
3) Moulds with metal coatings on a metal body, such as steel or aluminium with a chrome coating (the texture being gradually varied): type (c).
4) Moulds with fluoropolymer coatings (such as PFA, FEP and PTFE) on a metal body made of steel or aluminium; fluoropolymers declared to have high chemical and/or mechanical resistance: type (d).
5) Moulds with ceramic coatings on a metal body such as steel or aluminium: type (e).
6) Moulds made of PTFE with cavities cut out of the solid material: type (f).
7) Moulds with a metal body made of steel or aluminium, with a metal-matrix coating in which one or more fluoropolymers according to this invention are dispersed in micronised form, and with the specifications regarding the nature and composition of said coating reported in Table 1: type (g).

**Table 1**

| **Metal matrix** | **Fluoropolymer** | **% weight of fluoropolymer** | **% weight of metal matrix** | **average size of fluoropolymer particles** |
|---|---|---|---|---|
| Nickel | Polytetrafluoroethylene (PTFE) | 25-30 | 75-70 | 1 micron |

The coating described in Table 1 is applied by non-galvanic (chemical nickel) deposition to the metal body of the mould.

In the case of coated moulds, said coatings of different chemical natures all have the same thickness of 30 microns.

Plastic abrasives manufacturing processes have been conducted in moulds made with the specifications described above, under the same operating conditions, by heat-curing mixtures comprising polyester resins with a peroxide catalyst in the presence of quartz powder in high-temperature ovens at the temperature of 110°C.

Parameters such as the following were evaluated at the end of each process: the chemical and mechanical resistance of the mould, the ejectability of the finished piece from the mould, the number of manufacturing cycles before deterioration of the mould, and the overall conductivity of the mould, in order to compare the various types of mould used under the same operating. conditions. Said comparison is summarised in Table 2.

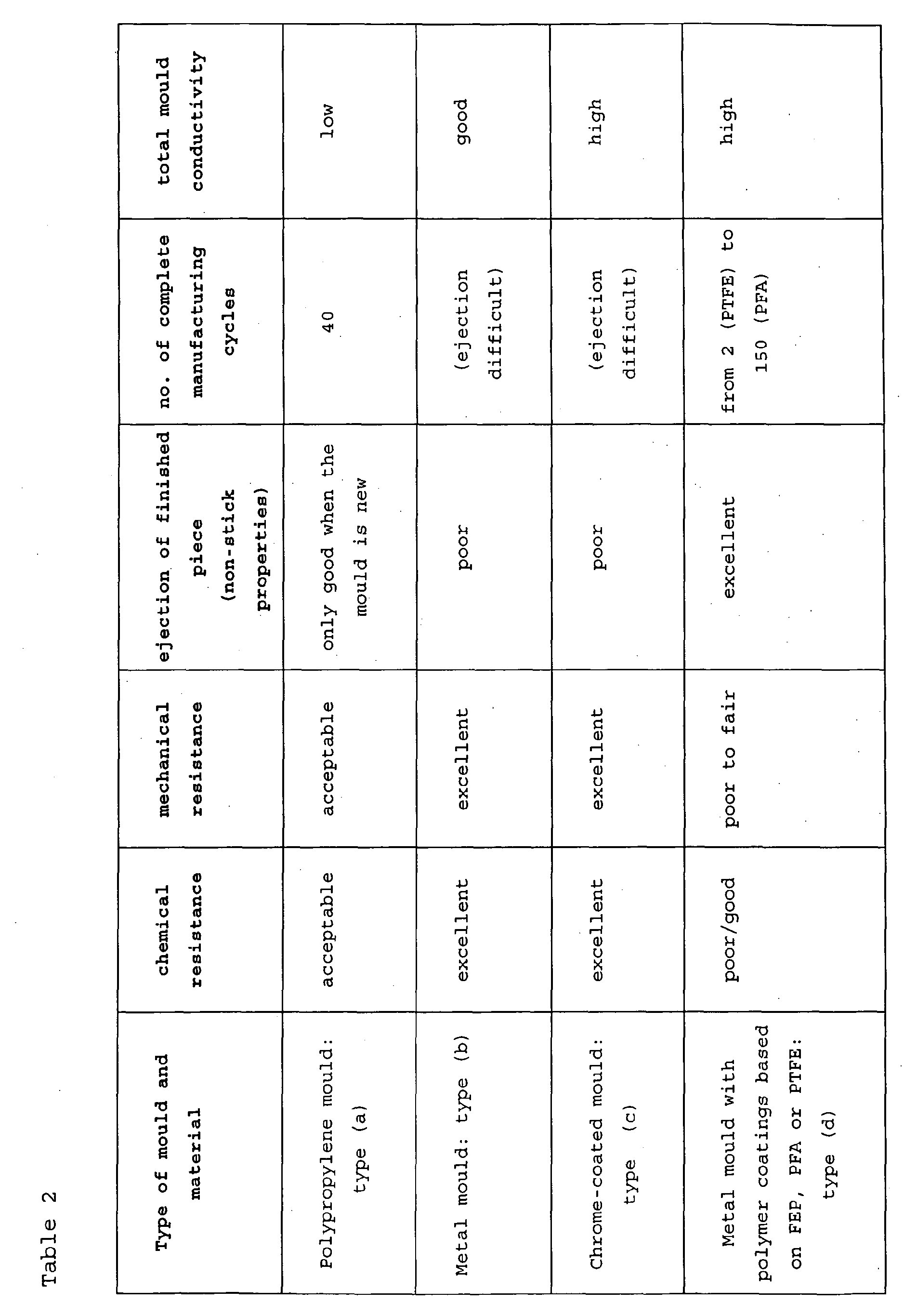

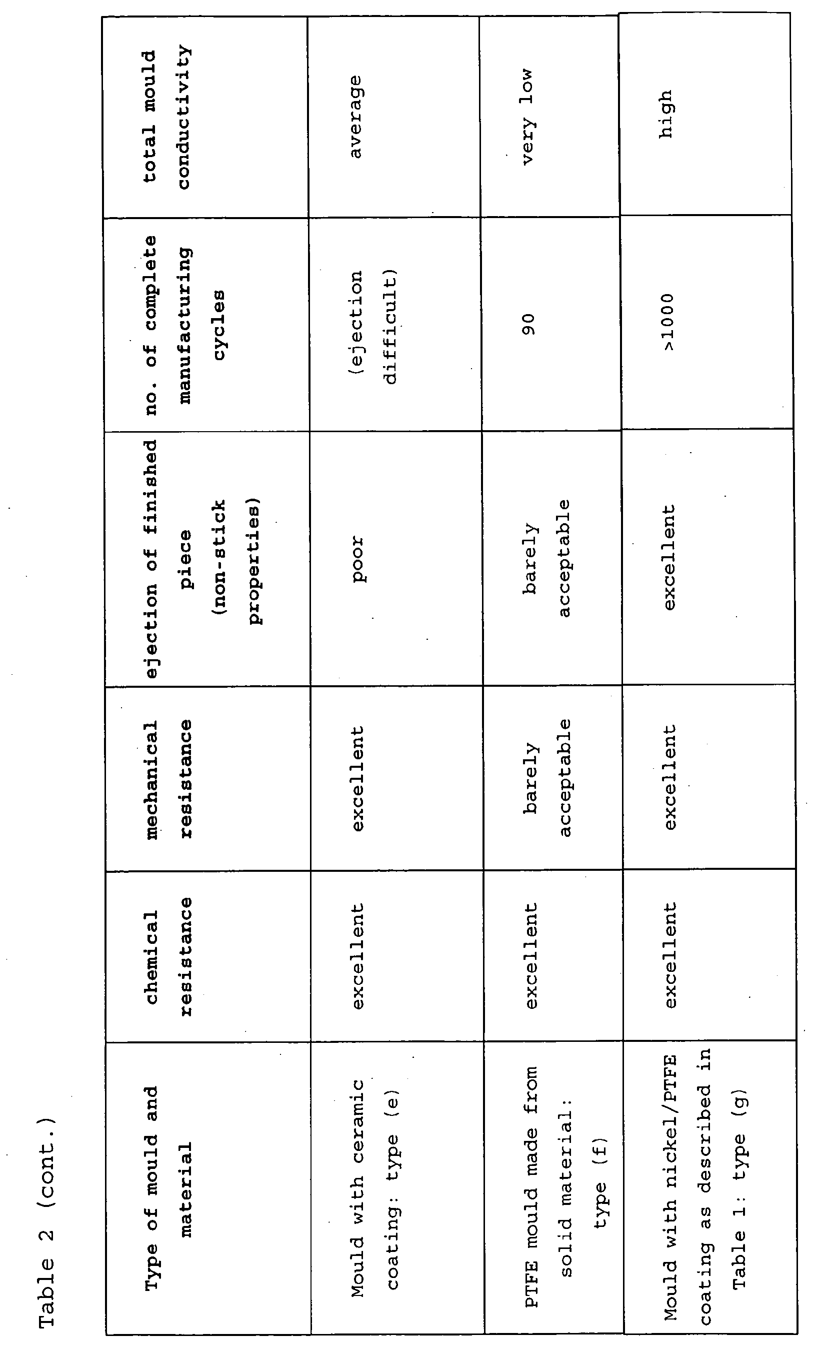

As Table 2 clearly shows, the moulds to which this invention relates have properties of chemical and physical resistance and non-stick properties which are far superior to the simple combination of the advantages of mechanical resistance originating from the metal component and the non-stick advantages of the fluoropolymer component, because the number of manufacturing cycles performed by the moulds according to the invention is at least one order of magnitude greater than the maximum number of manufacturing cycles which can be obtained with moulds made with only one of the materials composing the coating layer of the mould according to the invention.

## Claims

1. Mould for the production of plastic abrasives, of the type used individually or in sets for baking mixtures consisting of thermosetting resins combined with abrasive powders in high-temperature ovens, **characterised in that** said mould is coated with metal-matrix materials wherein at least one substance with non-stick properties is mixed in micronised form.

2. Mould for the production of plastic abrasives according to claim 1, **characterised in that** it is coated with metal-matrix materials wherein micronised teflon is mixed.

3. Mould for the production of plastic abrasives according to claim 1 or 2, **characterised in that** said coating is performed with non-galvanic treatments.

4. Mould for the production of plastic abrasives according to claim 1, **characterised in that** the body of the mould to be coated is constituted by metal material.

5. Support for moulds used in the production of plastic abrasives, of the type used for baking mixtures consisting of thermosetting resins combined with abrasive powders in high-temperature ovens, which comprises sets of moulds designed to be driven and positioned on support guides, **characterised in that** said moulds are removably secured individually to said support guides.

6. Support for moulds used in the production of plastic abrasives, according to claim 5,
**characterised in that** said support guides are dovetailed and are connected at the ends thereof to transport units associated with said drive chains.

7. Support for moulds used in the production of plastic abrasives, according to claim 5 or 6,
**characterised in that** said moulds for plastic abrasives are attached individually to said guides by means of a thread on the head which engages with a perforated, threaded bar, each of which said rods is inserted into the corresponding guides.

8. Support for moulds used in the production of plastic abrasives, according to claims 5-7,
**characterised in that** said transport units associated with said drive chains are constituted by anchorage wings to which plates are connected, counterplates being anchored to said plates by anchorage means.

9. Support for moulds used in the production of plastic abrasives, according to claims 5-8,
**characterised in that** tapes containing holes for said moulds are positioned between said moulds and said guides.

10. Support for moulds used in the production of plastic abrasives, according to claims 5-9, **characterised in that** said transport guides are protected by heat-resistant, anti-dilation, non-stick materials.

11. Support for moulds used in the production of plastic abrasives, according to claim 10,
**characterised in that** said transport guides are protected by teflon-impregnated fibreglass.

12. Mould according to claim 1, wherein the metal matrix is one or more metals, or alloys thereof, selected from the group consisting of: nickel, copper, chromium, cobalt, manganese, titanium, iron, zinc, aluminium, rhodium, palladium, silver, platinum, gold, vanadium, tungsten, lead and tin.

13. Mould according to claim 12, wherein the metal matrix is nickel.

14. Mould according to claim 1, wherein the substance with non-stick properties is one or more fluoropolymers, or mixtures thereof.

15. Mould according to claim 14, wherein said one or more fluoropolymers, or mixtures thereof, are selected from the group consisting of polytetrafluoroethylene (PTFE), fluorinated ethylenepropylene resins (FEP), perfluoroalkoxy (PFA), polyvinylidene fluoride (PVDF), ethylene tetrafluoroethylene (ETFE) and ethylene chlorotrifluoroethylene (ECTFE).

16. Mould according to claim 15, wherein the fluoropolymer is polytetrafluoroethylene (PTFE).

17. Mould according to claim 1, wherein the mould coating comprises a metal matrix in which at least one substance with non-stick properties, preferably fluoropolymer(s), is mixed in micronised form, in the percentage of 5% to 60% by weight, preferably 25% to 30% by weight, of the total weight of the metal matrix and the substance with non-stick properties.

18. Mould according to claim 1, wherein the mould coating consists of a metal matrix in which at least one substance with non-stick properties, preferably fluoropolymer(s), is mixed in micronised form in the percentage of 5% to 60% by weight, preferably 25% to 30% by weight, the percentage weight of the metal matrix being its complement to 100%.

19. Mould according to claim 1, wherein the substance with non-stick properties in micronised form is mixed in the form of particles with an average size of 0.1 µm to 200 µm, preferably with a size of 0.5 µm to 100 um, and more preferably in the form of particles with an average size of 1 µm.

20. Mould according to claim 1, wherein the mould is coated with materials consisting of a nickel metal matrix in which, as a substance with non-stick properties in micronised form, polytetrafluoroethylene (PTFE) is mixed in the percentage of 25% to 30% by weight, the percentage by weight of the metal matrix being its complement to 100%, and said PTFE in micronised form consisting of particles with an average size of 1 µm.

21. Process for manufacturing plastic abrasive by baking a mixture comprising at least a thermosetting resin combined with an heat initiators or catalyst and an abrasive powder or filler, wherein said mixture is contained in a mould according to claim 1.
